# FASCICULE DE BREVET EUROPEEN

(11) **EP 3 000 729 B1**
(45) Date de publication et mention de la délivrance du brevet: **08.11.2017**
(21) Numéro de dépôt: 15186984.9
(22) Date de dépôt: 25.09.2015
(51) Int. Cl.: B64C 25/36, B60T 8/32, B64C 25/34, B64D 43/00, F16C 41/00, G01P 3/36, G01P 3/44, B60T 8/00

(54) **ATTERRISSEUR D'AÉRONEF**
FAHRWERK EINES LUFTFAHRZEUGS
AIRCRAFT LANDING GEAR

(30) Priorité: 26.09.2014 FR 1459135
(43) Date de publication de la demande: 30.03.2016
(73) Titulaire: Safran Landing Systems, 78140 Vélizy-Villacoublay (FR)
(72) Inventeur: ZABULON, Joël, 78140 VELIZY-VILLACOUBLAY (FR); FRANK, David, 78140 VELIZY-VILLACOUBLAY (FR)
(74) Mandataire: Lavialle, Bruno François Stéphane

(56) Documents cités:
- EP-A1- 1 211 500
- EP-A1- 1 744 163
- EP-A1- 2 581 305
- WO-A1-01/20187
- DE-A1- 10 135 784

## Description

L'invention concerne le domaine des architectures distribuées des systèmes associés aux atterrisseurs d'aéronefs.

### ARRIERE PLAN DE L'INVENTION

Les systèmes avioniques des aéronefs modernes sont de moins en moins « centralisés » et de plus en plus « distribués ».

On remplace ainsi des architectures centralisées comportant un calculateur central, relativement complexe, connecté par de multiples câbles électriques à des actionneurs qu'il pilote ou à des capteurs lui fournissant des données de mesure, par des architectures distribuées comprenant un certain nombre de calculateurs « distants » situés à proximité des actionneurs et des capteurs. Ces calculateurs distants sont éventuellement reliés à un calculateur « coeur » dédié aux calculs.

L'éclatement du calculateur central en une pluralité de calculateurs distants permet de réduire la masse de l'aéronef grâce à la simplification du câblage, et de réduire le coût des systèmes avioniques, notamment grâce au fait que les calculateurs distants et le calculateur coeur sont désormais conçus pour être des calculateurs génériques pouvant être intégrés dans différents systèmes. Cet éclatement permet aussi d'améliorer la disponibilité des systèmes qui peuvent fonctionner en mode dégradé et qui présentent des possibilités de reconfiguration plus nombreuses en cas de panne d'un calculateur distant, d'un actionneur ou d'un capteur.

Un certain nombre d'architectures ont été proposées pour distribuer d'une part, le système de freinage des roues de l'aéronef (dont la mise en oeuvre de la fonction d'anti-patinage nécessite de mesurer la vitesse de rotation des roues freinées), et d'autre part, le système de surveillance de paramètres de fonctionnement du train d'atterrissage (température des freins, pression des pneumatiques, etc.). Dans chacune de ces architectures, un nombre relativement important de câbles électriques chemine toujours sur les atterrisseurs, ce qui est pénalisant en termes de masse et de fiabilité. On connaît par exemple le document EP 2 581 305 A1, qui est considéré comme l'art antérieur le plus proche et décrit les caractéristiques du préambule de la revendication 1.

### OBJET DE L'INVENTION

L'invention a pour objet de réduire le nombre de câbles électriques intégrés dans les systèmes associés au train d'atterrissage et cheminant sur les atterrisseurs.

### RESUME DE L'INVENTION

En vue de la réalisation de ce but, on propose un atterrisseur d'aéronef comportant un essieu destiné à recevoir une roue comprenant une jante montée pour tourner sur l'essieu au moyen d'au moins un roulement, ledit roulement comprenant une bague intérieure montée autour de l'essieu et une bague extérieure solidaire en rotation de la jante de la roue, l'atterrisseur comportant en outre des moyens de mesure destinés à effectuer des mesures d'au moins un paramètre de fonctionnement de l'atterrisseur. Selon l'invention, les moyens de mesure sont intégrés au roulement en étant solidarisés à l'une des bagues intérieure et extérieure du roulement. En intégrant les moyens de mesure au roulement de la roue de l'aéronef, on positionne ces moyens de mesure au plus près des capteurs mesurant les paramètres de fonctionnement de l'atterrisseur, et on réduit donc la longueur des câbles électriques reliant les capteurs aux moyens de mesure. Les moyens de mesure peuvent par ailleurs transmettre ces paramètres de fonctionnement à un boîtier électronique de l'aéronef via un unique câble de données cheminant sur l'atterrisseur. On réduit ainsi de manière significative à la fois le nombre et la longueur des câbles associés à ces moyens de mesure situés sur l'atterrisseur.

### BREVE DESCRIPTION DES DESSINS

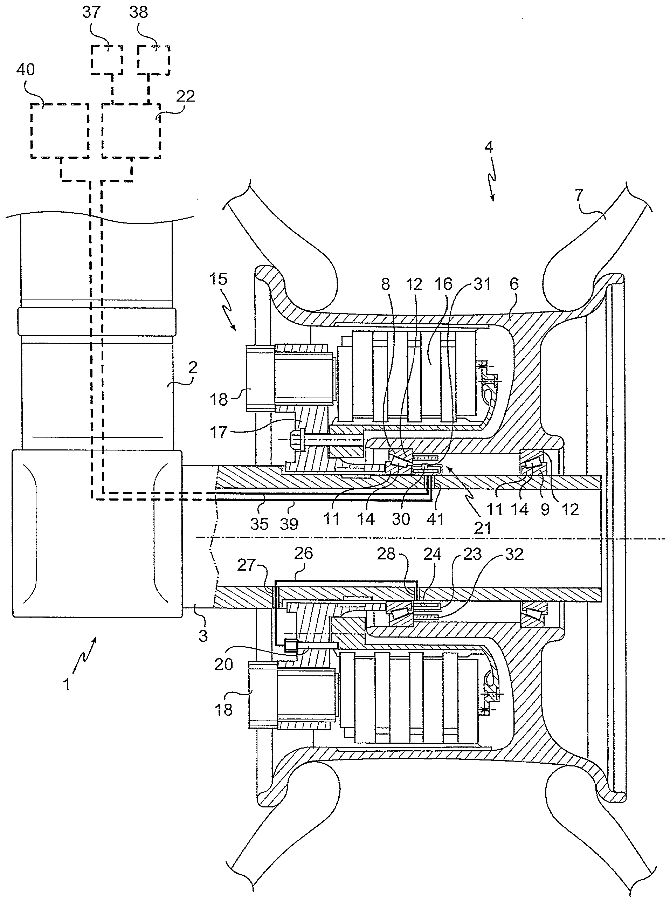

L'invention sera mieux comprise à la lumière de la description qui suit en référence à la figure annexée, qui représente une vue de face de l'atterrisseur de l'invention et une vue en coupe d'une roue portée par l'atterrisseur de l'invention.

### DESCRIPTION DETAILLEE DE L'INVENTION

En référence à la figure unique, l'atterrisseur 1 de l'invention comporte de manière classique un caisson articulé à la structure d'un aéronef dans lequel une tige coulissante 2 est montée à coulissement télescopique. La tige coulissante 2 porte à son extrémité un essieu 3 destiné à recevoir deux roues 4, seule l'une des roues 4 étant représentée sur la figure pour améliorer la lisibilité de cette figure.

La roue 4 comporte une jante 6 qui porte un pneumatique 7 et qui est montée pour tourner sur l'essieu 3 au moyen d'un roulement conique intérieur 8 et d'un roulement conique extérieur 9. Chacun de ces roulements coniques 8, 9 comporte une bague intérieure 11 montée autour de l'essieu 3, une bague extérieure 12 solidaire en rotation de la jante 6 de la roue 4, une cage et des rouleaux coniques 14.

La roue 4 est en outre équipée d'un frein 15 adapté à freiner la roue, le frein 15 comportant une pile de disques de carbone 16 s'étendant dans la jante 6 de la roue 4, une couronne 17 fixée sur l'essieu 3, et une pluralité d'actionneurs électromécaniques 18 portés par la couronne 17 et adaptés à appliquer sélectivement un effort de freinage sur la pile de disques 16.

Le frein 15 comporte un capteur de température 20 destiné à mesurer la température régnant à l'intérieur de la pile de disques 16 (ou, plus exactement, à proximité de la pile de disques 16). Ce capteur de température 20 est en l'occurrence une sonde thermocouple qui s'étend à l'intérieur d'une cavité du frein parallèlement à l'essieu 3 et à proximité de la pile de disques 16.

Des moyens de mesure 21 sont intégrés au roulement conique intérieur 8 en étant solidarisés à la bague intérieure 11 du roulement conique intérieur 8.

Les moyens de mesure 21 sont ici destinés à acquérir des mesures de température de la pile de disques 16 du frein 15 fournies par le capteur de température 20, à mesurer et à acquérir la vitesse de rotation de la roue 4, et à transmettre ces données à un boîtier électronique 22 de l'aéronef situé en soute à proximité de l'atterrisseur 1.

Les moyens de mesure 21 comportent un boîtier 23 de forme extérieure sensiblement annulaire. Le boîtier 23 est fixé à la bague intérieure 11 du roulement conique intérieur 8 et s'étend autour de l'essieu 3. Le boîtier 23 contient une carte électrique flexible 24 présentant elle aussi, lorsqu'elle est intégrée dans le boîtier 23, une forme annulaire. Des composants électriques, parmi lesquels on trouve des composants de traitement et des composants de communication, sont montés sur les deux faces de la carte électrique flexible 24.

Pour acquérir les mesures de température de la pile de disques 16 du frein 15, les composants de traitement de la carte électrique flexible 24 sont reliés par un premier câble électrique 26 au capteur de température 20. Le premier câble électrique 26 traverse l'essieu 3 en passant par un premier orifice 27 ménagé dans l'essieu 3 à cet effet, chemine à l'intérieur de l'essieu 3, puis atteint les moyens de mesure en traversant l'essieu par un deuxième orifice 28. Les composants de traitement acquièrent un premier signal mesuré fourni par le capteur de température 20 et transforment ce premier signal mesuré en un signal de température représentatif de la température de la pile de disques 16 du frein 15.

Pour mesurer la vitesse de rotation de la roue 4, les moyens de mesure comportent un capteur magnétique 30, en l'occurrence un capteur à effet Hall. Le capteur magnétique 30 est monté sur la carte électrique flexible 24 et est disposé de manière à saillir légèrement du boîtier 23 au travers d'une ouverture 31 pratiquée à cet effet dans le boîtier 23.

Les moyens de mesure 21 comportent de plus une couronne de mesure 32 munie d'une pluralité d'aimants disposés sur une face intérieure de la couronne de mesure 32. La couronne de mesure 32 est elle-aussi intégrée au roulement conique intérieur 8 en étant solidarisée à la bague extérieure 12 du roulement conique intérieur 8. La couronne de mesure 32 et le capteur magnétique 30 sont positionnés de sorte que les aimants de la couronne de mesure 32 sont directement en regard du capteur magnétique 30. Une rotation de la roue 4 de l'aéronef entraîne une rotation de la bague extérieure 12 du roulement conique intérieur 8 et donc de la couronne de mesure 32. Le capteur magnétique 30 détecte des variations de champ magnétique résultant de la rotation des aimants de la couronne de mesure 32. La fréquence de ces variations de champ magnétique est proportionnelle à la vitesse de rotation de la roue 4. Le capteur magnétique 30 génère donc un deuxième signal mesuré, acquis par les composants de traitement de la carte électrique flexible 24, qui transforment ce deuxième signal mesuré en un signal de vitesse représentatif de la vitesse de rotation de la roue 4.

On note que le tachymètre ainsi constitué par le capteur magnétique 30 et par la couronne de mesure 32 ne nécessite pas l'utilisation d'un arbre d'entraînement relié à un capot de la roue, comme c'est le cas des tachymètres traditionnels des roues d'aéronef. L'absence d'un tel arbre permet d'éviter un certain nombre de problèmes, parmi lesquels la génération de niveaux de vibrations élevés et potentiellement bruyants au niveau du tachymètre liés à la rigidité de l'arbre, l'usure des dentures constituant l'accouplement entre l'arbre et le capot de roue, etc.

Le signal de température et le signal de vitesse sont transmis au boîtier électronique 22 de l'aéronef par les composants de communication de la carte électrique flexible 24 via un deuxième câble électrique 35 cheminant à l'intérieur de l'essieu 3. Le deuxième câble électrique 35 traverse l'essieu 3 à proximité des moyens de mesure 21 en passant par un troisième orifice 41 pratiqué dans l'essieu 3.

Le signal de température est ensuite transmis par le boîtier électronique 22 à un premier calculateur 37 adapté à traiter ce signal de température. Le traitement réalisé peut consister par exemple à émettre une alarme lorsque la température de la pile de disques 16 du frein 15 mesurée est supérieure à un certain seuil prédéfini, ou lorsque des différences importantes de température sont détectées entre les freins de différentes roues. De même, le signal de vitesse est ensuite transmis par le boîtier électronique 22 à un deuxième calculateur 38 (par exemple de type BSCU) chargé de mettre en oeuvre la fonction d'anti-patinage.

On note qu'un troisième câble électrique 39 chemine à l'intérieur de l'essieu 3 en empruntant un chemin similaire à celui du deuxième câble électrique 35. Le troisième câble électrique 39 relie un boîtier de puissance 40 à la carte électrique flexible 24, et est utilisé pour transmettre à celle-ci une alimentation électrique nécessaire à son fonctionnement.

L'invention n'est pas limitée au mode de réalisation particulier qui vient d'être décrit, mais, bien au contraire, couvre toute variante entrant dans le cadre de l'invention tel que défini par les revendications.

Bien que l'on ait ici décrit que les moyens de mesure sont intégrés au roulement conique intérieur, ceux-ci peuvent parfaitement être intégrés au roulement conique extérieur. L'intégration des moyens de mesure au roulement conique extérieur est avantageuse du point de vue thermique, car le roulement conique extérieur est moins soumis à l'élévation de température provoqué par l'échauffement de la pile de disques lors d'un freinage. On peut d'ailleurs prévoir de munir l'atterrisseur de premiers moyens de mesure équipant le roulement intérieur et de deuxièmes moyens de mesure équipant le roulement extérieur, ce qui permet de redonder les fonctions (acquisition, mesure, traitement, etc.) réalisées par les moyens de mesure.

Bien que l'on ait décrit des moyens de mesure solidarisés à la bague intérieure du roulement, les moyens de mesure peuvent parfaitement être solidarisés à la bague extérieure du roulement. Dans ce cas, leur alimentation en énergie électrique doit être effectuée sans connexion filaire. Une manière avantageuse d'alimenter les moyens de mesure consiste à leur transmettre de l'énergie électrique via un couplage inductif réalisé par une première bobine équipant la bague intérieure et une deuxième bobine équipant la bague extérieur. Tout autre type de couplage magnétique ou radioélectrique peut être mis en oeuvre, avec tout type d'antenne. Les moyens de mesure sont ainsi parfaitement adaptés à acquérir des mesures réalisées par un ou des capteurs positionnés sur la roue et donc solidaires en rotation de celle-ci : capteur de mesure de la pression régnant à l'intérieur du pneumatique, accéléromètre, etc. Les données mesurées sont alors transmises via le couplage inductif en sens inverse, c'est-à-dire depuis la bague extérieure vers la bague intérieure.

Bien que l'on ait indiqué que la carte électrique comporte un unique capteur à effet Hall, il est bien sûr possible de munir les moyens de mesure d'une pluralité de capteurs, ce qui permet d'améliorer la précision, la résolution et la fiabilité de la mesure.

Le capteur magnétique destiné à mesurer la vitesse de rotation de la roue n'est pas nécessairement un capteur à effet Hall.

Le capteur magnétique peut par exemple comporter un bobinage dans lequel circule un courant de mesure généré par l'effet de la rotation des aimants de la couronne de mesure et dont l'amplitude varie en fonction des variations de champ magnétique résultant de la rotation des aimants. Dans le cas où un tel capteur est utilisé et où le courant de mesure est suffisant, il peut être particulièrement avantageux d'utiliser ce courant de mesure généré dans le bobinage pour alimenter la carte électrique des moyens de mesure. Le troisième câble électrique n'est alors plus nécessaire. Le bobinage est alors positionné sur la bague du roulement solidaire des moyens de mesure, et le ou les aimants sont positionnés sur l'autre bague.

La couronne de mesure, quant à elle, n'est pas nécessairement munie d'aimants, mais peut par exemple prendre la forme d'une roue dentée. Le champ magnétique mesuré à un instant donné par le capteur magnétique a une amplitude différente selon qu'une dent ou un creux entre deux dents est positionné en face du capteur magnétique à cet instant donné.

On note ici que le diamètre de la couronne de mesure est nettement plus important que celui d'une couronne de mesure d'un tachymètre traditionnel, qui est intégrée à l'intérieur de l'essieu et non à l'extérieur comme c'est le cas dans l'invention. On peut ainsi concevoir une couronne de mesure ayant un nombre d'aimants ou de dents jusqu'à deux fois supérieur à celui d'une couronne de mesure traditionnelle, ce qui permet d'améliorer nettement la précision de la mesure de vitesse de la roue de l'aéronef à basse vitesse.

On peut aussi utiliser un capteur de vitesse non magnétique, par exemple un capteur optique coopérant avec une roue codeuse optique. Le capteur optique est alors intégré aux moyens de mesure et la roue codeuse est montée solidaire en rotation de la bague du roulement qui n'est pas solidaire des moyens de mesure.

Il est bien sûr envisageable de connecter les moyens de mesure à d'autres capteurs de paramètres de fonctionnement de l'atterrisseur, par exemple à un capteur de la pression du pneumatique de la roue, à un accéléromètre, à un capteur de couple de freinage, etc.

Bien que l'on ait décrit que le deuxième câble électrique reliant les moyens de mesure au boîtier électronique de l'aéronef et le troisième câble électrique cheminent à l'intérieur de l'essieu, il est possible d'installer ces câble électrique (ou l'un de ces câble) de manière à ce qu'ils longent l'essieu en étant situés à l'extérieur de celui-ci.

## Revendications

1. Atterrisseur d'aéronef comportant un essieu (3) destiné à recevoir une roue (4) comprenant une jante (6) montée pour tourner sur l'essieu (3) au moyen d'au moins un roulement (8), ledit roulement (8) comprenant une bague intérieure (11) montée autour de l'essieu (3) et une bague extérieure (12) solidaire en rotation de la jante (6) de la roue (4), l'atterrisseur comportant en outre des moyens de mesure (21) destinés à effectuer des mesures d'au moins un paramètre de fonctionnement de l'atterrisseur, **caractérisé en ce que** les moyens de mesure (21) sont intégrés au roulement (8) en étant solidarisés à l'une des bagues intérieure et extérieure du roulement (8).

2. Atterrisseur d'aéronef selon la revendication 1, dans lequel les moyens de mesure (21) comportent au moins un capteur (30) destiné à mesurer la vitesse de rotation de la roue (4) de l'aéronef.

3. Atterrisseur d'aéronef selon la revendication 2, dans lequel le capteur (30) est un capteur magnétique coopérant avec une couronne de mesure (32) montée solidaire en rotation de l'autre des bagues extérieure et intérieure du roulement (8).

4. Atterrisseur d'aéronef selon la revendication 3, dans lequel la couronne de mesure (32) a une forme de roue dentée.

5. Atterrisseur d'aéronef selon la revendication 3, dans lequel la couronne de mesure (32) comporte au moins un aimant.

6. Atterrisseur d'aéronef selon la revendication 3, dans lequel le capteur (30) est un capteur à effet Hall.

7. Atterrisseur d'aéronef selon la revendication 3, dans lequel le capteur comporte un bobinage.

8. Atterrisseur d'aéronef selon la revendication 7, dans lequel la rotation de la couronne de mesure génère un courant circulant dans le bobinage, ledit courant étant utilisé pour alimenter les moyens de mesure.

9. Atterrisseur d'aéronef selon la revendication 2, dans lequel le capteur (30) est un capteur optique.

10. Atterrisseur d'aéronef selon la revendication 9, dans lequel le capteur optique coopère avec une roue codeuse montée solidaire en rotation de l'autre des bagues extérieure et intérieure du roulement (8).

11. Atterrisseur d'aéronef selon l'une des revendications précédentes, dans lequel les moyens de mesure (21) comportent une carte électrique (24) destinée à acquérir des mesures de vitesse de rotation de la roue de l'aéronef et/ou de température d'un frein de la roue et/ou de pression d'un pneumatique de la roue et/ou d'une accélération de la roue.

12. Atterrisseur d'aéronef selon l'une des revendications précédentes, dans lequel les moyens de mesure (21) sont reliés électriquement à un boîtier électronique (22) de l'aéronef par un câble électrique (35) cheminant à l'intérieur de l'essieu (3).

13. Atterrisseur d'aéronef selon l'une des revendications précédentes, dans lequel les moyens de mesure (21) sont reliés électriquement à un boîtier électronique (22) de l'aéronef par un câble électrique cheminant le long de l'essieu à l'extérieur de celui-ci.

## Patentansprüche

1. Luftfahrzeugfahrwerk, umfassend eine Radachse (3), die dazu bestimmt ist, ein Rad (4) aufzunehmen, das eine Felge (6) umfasst, die mittels mindestens eines Wälzlagers (8) drehbar auf der Radachse (3) gelagert ist, wobei das Wälzlager (8) einen Innenring (11) umfasst, der um die Radachse (3) gelagert ist, sowie einen Außenring (12), der drehfest mit der Felge (6) des Rades (4) verbunden ist, wobei das Fahrwerk ferner Messmittel (21) umfasst, die dazu bestimmt sind, Messungen mindestens eines Funktionsparameters des Fahrwerks durchzuführen, **dadurch gekennzeichnet, dass** die Messmittel (21) in das Wälzlager (8) integriert sind, indem sie fest mit einem Ring aus dem Innenring und dem Außenring des Wälzlagers (8) verbunden sind.

2. Luftfahrzeugfahrwerk nach Anspruch 1, bei dem die Messmittel (21) mindestens einen Sensor (30) umfassen, der dazu bestimmt ist, die Drehgeschwindigkeit des Rades (4) des Luftfahrzeugs zu messen.

3. Luftfahrzeugfahrwerk nach Anspruch 2, bei dem der Sensor (30) ein magnetischer Sensor ist, der mit einem Messkranz (32) zusammenwirkt, der drehfest auf dem anderen Ring aus dem Außenring und dem Innenring des Wälzlagers (8) gelagert ist.

4. Luftfahrzeugfahrwerk nach Anspruch 3, bei dem der Messkranz (32) eine Form eines Zahnrades hat.

5. Luftfahrzeugfahrwerk nach Anspruch 3, bei dem der Messkranz (32) mindestens einen Magneten umfasst.

6. Luftfahrzeugfahrwerk nach Anspruch 3, bei dem der Sensor (30) ein Halleffekt-Sensor ist.

7. Luftfahrzeugfahrwerk nach Anspruch 3, bei dem der Sensor eine Wicklung umfasst.

8. Luftfahrzeugfahrwerk nach Anspruch 7, bei dem die Drehung des Messkranzes einen in der Wicklung zirkulierenden Strom erzeugt, wobei der Strom zum Speisen der Messmittel verwendet wird.

9. Luftfahrzeugfahrwerk nach Anspruch 2, bei dem der Sensor (30) ein optischer Sensor ist.

10. Luftfahrzeugfahrwerk nach Anspruch 9, bei dem der optische Sensor mit einer Kodierscheibe zusammenwirkt, die drehfest auf dem anderen Ring aus dem Außenring und dem Innenring des Wälzlagers (8) gelagert ist.

11. Luftfahrzeugfahrwerk nach einem der vorhergehenden Ansprüche, bei dem die Messmittel (21) eine elektrische Karte (24) umfassen, die dazu bestimmt ist, Drehgeschwindigkeitsmessungen des Rades des Luftfahrzeugs und/oder Temperaturmessungen einer Bremse des Rades und/oder Druckmessungen eines Reifens des Rades und/oder Beschleunigungsmessungen des Rades zu erfassen.

12. Luftfahrzeugfahrwerk nach einem der vorhergehenden Ansprüche, bei dem die Messmittel (21) elektrisch mit einem elektronischen Gehäuse (22) des Luftfahrzeugs über ein elektrisches Kabel (35) verbunden sind, das im Inneren der Radachse (3) verläuft.

13. Luftfahrzeugfahrwerk nach einem der vorhergehenden Ansprüche, bei dem die Messmittel (21) elektrisch mit einem elektronischen Gehäuse (22) des Luftfahrzeugs über ein elektrisches Kabel verbunden sind, das entlang der Radachse außen an derselben verläuft.

## Claims

1. An Aircraft landing gear comprising an axle (3) intended to receive a wheel (4) comprising a rim (6) mounted to rotate on the axle (3) by means of at least one rolling bearing (8), said rolling bearing (8) comprising an inner ring (11) mounted around the axle (3) and an outer ring (12) rotationally secured to the rim (6) of the wheel (4), the landing gear further comprising measurement means (21) intended to perform measurements of at least one operating parameter of the landing gear, **characterized in that** the measurement means (21) are incorporated in the rolling bearing (8) by being secured to one of the inner and outer rings of the rolling bearing (8).

2. The aircraft landing gear according to Claim 1, in which the measurement means (21) comprise at least one sensor (30) intended to measure the speed of rotation of the wheel (4) of the aircraft.

3. The aircraft landing gear according to Claim 2, in which the sensor (30) is a magnetic sensor cooperating with a measurement crown ring (32) mounted rotationally secured to the other of the outer and inner rings of the rolling bearing (8).

4. The aircraft landing gear according to Claim 3, in which the measurement crown ring (32) is in the form of a toothed wheel.

5. The aircraft landing gear according to Claim 3, in which the measurement crown ring (32) comprises at least one magnet.

6. The aircraft landing gear according to Claim 3, in which the sensor (30) is a Hall effect sensor.

7. The aircraft landing gear according to Claim 3, in which the sensor comprises a winding.

8. The aircraft landing gear according to Claim 7, in which the rotation of the measurement crown ring generates a current circulating in the winding, said current being used to power the measurement means.

9. The aircraft landing gear according to Claim 2, in which the sensor (30) is an optical sensor.

10. The aircraft landing gear according to Claim 9, in which the optical sensor cooperates with a coding wheel mounted rotationally secured to the other of the outer and inner rings of the rolling bearing (8).

11. The aircraft landing gear according to one of the preceding claims, in which the measurement means (21) comprise an electrical board (24) intended to acquire measurements of speed of rotation of the wheel of the aircraft and/or of temperature of a brake of the wheel and/or of pressure of a tyre of the wheel and/or of an acceleration of the wheel.

12. The aircraft landing gear according to one of the preceding claims, in which the measurement means (21) are electrically linked to an electronic module (22) of the aircraft by an electrical cable (35) running inside the axle (3).

13. The aircraft landing gear according to one of the preceding claims, in which the measurement means (21) are electrically linked to an electronic module (22) of the aircraft by an electrical cable running along the axle outside the latter.
